# EUROPÄISCHE PATENTSCHRIFT

(11) **EP 2 755 813 B1**
(45) Veröffentlichungstag und Bekanntmachung des Hinweises auf die Patenterteilung: **25.04.2018**
(21) Anmeldenummer: 12772062.1
(22) Anmeldetag: 05.09.2012
(51) Int. Cl.: B29C 64/153, B29C 64/386

(54) **VORRICHTUNG UND VERFAHREN ZUR GENERATIVEN HERSTELLUNG EINES BAUTEILS**
DEVICE AND METHOD FOR GENERATIVE PRODUCTION OF A COMPONENT
DISPOSITIF ET PROCÉDÉ DE FABRICATION GÉNÉRATIVE D'UN ÉLÉMENT STRUCTURAL

(30) Priorität: 15.09.2011 DE 102011113445
(43) Veröffentlichungstag der Anmeldung: 23.07.2014
(73) Patentinhaber: MTU Aero Engines GmbH, 80995 München (DE)
(72) Erfinder: JAKIMOV, Andreas, 81245 München (DE); SATZGER, Wilhelm, 80804 München (DE); HESS, Thomas, 81541 München (DE)
(86) Internationale Anmeldenummer: PCT/DE2012/000886
(87) Internationale Veröffentlichungsnummer: WO 2013/037346

(56) Entgegenhaltungen:
- WO-A1-01/81031
- WO-A1-2007/147221
- DE-A1-102009 055 661
- DE-B3-102006 053 121

## Beschreibung

Die vorliegende Erfindung betrifft eine Vorrichtung und ein Verfahren zur generativen Herstellung eines Bauteils, insbesondere einer Turbomaschine, vorzugsweise einer Gasturbine, sowie ein hiermit hergestelltes Bauteil.

Zum generativen Herstellen von Bauteilen wird abwechselnd verfestigbares Material auf dem entstehenden Bauteil aufgebracht und lokal, beispielsweise durch einen Laser oder eine maskierte Belichtung, verfestigt. Vorzugsweise wird dazwischen ein Träger mit dem entstehenden Bauteil abgesenkt, um Raum für eine weitere Schicht verfestigbaren Materials zu schaffen. Auf diese Weise können insbesondere dreidimensionale Bauteile mit komplexen Geometrien hergestellt werden.

Beim generativen Herstellen können diverse Fehler auftreten. Insbesondere kann in einer Schicht verfestigbares Material falsch, insbesondere in zu geringer Menge, aufgebracht werden, so dass die daraus entstehende Bauteilschicht fehlerhaft ist.

Die DE 10 2009 055 661 A1 schlägt daher vor, zusammen mit dem Bauteil einen Testkörper aufzubauen und nach Fertigstellung von Bauteil und Testkörper Eigenfrequenzen mechanischer Schwingungen des Testkörpers zu ermitteln. Nachteilig können dabei erst beim fertigen Bauteil indirekt Herstellungsfehler erkannt werden. Tritt der Fehler bereits in einer frühen Schicht auf, vergeudet die anschließende Fertigstellung des Bauteils Zeit und Material. Zudem können Fehler in schwer anregbaren Bereichen unentdeckt bleiben.

Daher ist es die Aufgabe der vorliegenden Erfindung, die generative Herstellung von Bauteilen zu verbessern. Diese Aufgabe wird durch ein Verfahren nach Anspruch 1 und eine Vorrichtung nach Anspruch 5 gelöst. Die vorliegende Erfindung basiert auf der Idee, bereits während der Herstellung Fehler bei der Herstellung zu erkennen. Hierzu wird allgemein vorgeschlagen, vollständig oder teilweise automatisiert eine physikalische Größe der Vorrichtung und/oder des entstehenden Bauteils zu erfassen und mit einer vorgegebenen Referenzgröße zu vergleichen. In der vorliegenden Erfindung handelt es sich um eine akustische Größe einer Klinge und/oder deren Befestigung, die mittels einer Klanganalyse erfasst und mit einer Referenzklanganalyse verglichen wird. Die vorliegende Erfindung wird nachfolgend insbesondere anhand dieser bevorzugten Ausführung erläutert, ohne hierauf beschränkt zu sein.

Ein Bauteil wird generativ hergestellt, indem in einem ersten Zyklus eine Schicht verfestigbaren Materials auf einem Träger aufgebracht wird. Das verfestigbare Material ist vorzugsweise schüttgutartig, insbesondere pulverförmig oder körnig, oder flüssig. Es wird lokal verfestigt. Dies kann insbesondere optisch, vorzugsweise durch wenigstens einen Laserstrahl und/oder eine maskierte Belichtung, erfolgen, gleichermaßen aber auch thermisch, chemisch oder auf andere Weise. Unter einer lokalen Verfestigung im Sinne der vorliegenden Erfindung wird insbesondere verstanden, dass in der Schicht verfestigbaren Materials gezielt diejenigen Bereiche verfestigt werden, die eine Schicht bzw. einen Querschnitt des herzustellenden Bauteils bilden sollen.

In darauffolgenden Zyklen wird dann auf der jeweils vorhergehenden Schicht verfestigbares Material aufgebracht und entsprechend der gewünschten Bauteilschicht lokal verfestigt. Diese Zyklen werden wiederholt, bis das Bauteil schichtweise hergestellt ist.

Zwischen zwei Zyklen kann das entstehende Bauteil relativ zu der Vorrichtung bewegt werden. Dabei kann gleichermaßen das Bauteil bzw. ein dieses positionierender Träger, die übrige Vorrichtung, insbesondere ein Hohlraum zur Außenbegrenzung der Schicht verfestigbaren Materials, oder beides, vorzugsweise motorisch, bewegt werden. In einer bevorzugten Ausführung wird der Träger mit dem entstehenden Bauteil nach Herstellung einer Schicht um die Wandstärke der nächsten, herzustellenden Schicht in dem Hohlraum der Vorrichtung abgesenkt und der so entstehende Raum, der seitlich durch den Rand des Hohlraums und bodenseitig durch die bereits hergestellte Bauteilschicht und das sie umgebende, nicht verfestigte Material definiert ist, mit weiterem verfestigbaren Material gefüllt. Gleichermaßen kann der Hohlraum entsprechend angehoben werden, es können auch Hohlraum und Träger bewegt werden. Die übrige Vorrichtung muss keinen Hohlraum aufweisen, es kann eine Plattform genügen, die relativ zum Träger bewegt wird und auf der eine Schicht verfestigbaren Materials mit freien Rändern aufgebracht wird.

Erfindungsgemäß wird nun in einem oder mehreren Zyklen vollständig oder teilweise automatisiert eine physikalische Größe der Vorrichtung und/oder des entstehenden Bauteils erfasst und mit einer vorgegebenen Referenzgröße verglichen. Auf diese Weise kann vorteilhafterweise bereits während des Herstellvorgangs und somit frühzeitig ein Fehler erkannt und entsprechend reagiert werden. Gleichermaßen ist es möglich, den Herstellungsvorgang zu überwachen und so an dessen Ende das hergestellte Bauteil zu bewerten. Zusätzlich oder alternativ kann das erfindungsgemäße Verfahren die Möglichkeit bieten, Veränderungen der Vorrichtung zu überwachen. Falls die erfasste physikalische Größe von der vorgegebenen Referenzgröße um mehr als eine vorgegebene Toleranz abweicht, kann eine Reaktion erfolgen, beispielsweise der Herstellvorgang abgebrochen und das unfertige Bauteil ausgesondert werden, ein Herstellungsschritt, insbesondere das Aufbringen verfestigbaren Materials, korrigiert oder wiederholt werden, ein Element der Vorrichtung ausgetauscht oder verändert, insbesondere nachjustiert werden, oder dergleichen.

Die physikalische Größe ist eine akustische Größe. Wie einleitend erläutert, wird in der vorliegenden Erfindung eine akustische Größe erfasst, insbesondere ein Ton, Klang oder Geräusch, den bzw. das die Vorrichtung, insbesondere ein Aufbringmittel zum Zuführen, Verteilen und/oder Entfernen von verfestigbarem Material und vorzugsweise eine Klinge, abstrahlt. Eine akustische Größe im Sinne der vorliegenden Erfindung kann insbesondere eine Größe einer Schallabstrahlung der Vorrichtung oder des herzustellenden Bauteils beschreiben. Vorzugsweise umfasst die akustische Größe ein Frequenzspektrum, eine Schallfeldgröße wie eine Schallschnelle, einen Schalldruck, eine Schallintensität, einen Schallpegel oder dergleichen. Entsprechend ist die Erfassung der physikalischen Größe eine Klanganalyse. Eine Klanganalyse im Sinne der vorliegenden Erfindung kann insbesondere die Vermessung von Schallwellen in Frequenz, Amplitude und zeitlicher Klangentwicklung, insbesondere die Hüllkurve des Zeitsignals, umfassen, die die Vorrichtung bzw. das herzustellende Bauteil abstrahlen.

Das Aufbringmittel, dessen physikalische Größe erfasst wird, umfasst eine Klinge zum Zuführen, Verteilen und/oder Entfernen von verfestigbarem Material und/oder deren Befestigung. Schwingungen der Klinge werden einerseits durch das verfestigbare Material und andererseits durch ihre Befestigung, beeinflusst. Insbesondere können sie gedämpft und/oder Eigenfrequenzen verändert werden. Entsprechend lassen mechanische Schwingungen der Klinge und somit auch von diesen erzeugte Schallwellen oder von diesen beeinflusstes reflektiertes Licht Rückschlüsse auf Art, Menge und/oder Verteilung von verfestigbarem Material und/oder der Befestigung zu. Eine Befestigung im Sinne der vorliegenden Erfindung kann insbesondere eine Einspannung und/oder einen Träger einer Klinge umfassen.

In der vorliegenden Erfindung wird die Vorrichtung bzw. das entstehende Bauteil akustisch und/oder mechanisch angeregt, um die physikalische Größe zu erfassen. Insbesondere kann die Klinge und/oder ihre Befestigung mechanisch durch Anschlagen oder Vibrieren, akustisch mittels Schallbeaufschlagung angeregt werden. Wird die Vorrichtung bzw. das entstehende Bauteil in einer bevorzugten Ausführung zu mechanischen Schwingungen angeregt, können diese, von der Vorrichtung bzw. dem entstehenden Bauteil abgestrahlte Schallwellen als physikalische Größer erfasst werden. Im Sinne der vorliegenden Erfindung wird auch Ultraschall als Schall bezeichnet. Die gezielte Anregung kann den Vorteil bieten, dass die physikalische Größe zu gewünschten Erfassungszeiten zur Verfügung steht, und/oder dass die Antwort auf eine bekannte Anregung besser mit der Referenzgröße verglichen werden kann.

In einer bevorzugten Ausführung wird zur Vorgabe der Referenzgröße die physikalische Größe während eines, insbesondere kontrollierten und/oder ersten, Zyklus erfasst. Unter einem kontrollierten Zyklus wird vorliegend insbesondere ein Zyklus verstanden, der und/oder dessen Ergebnis, insbesondere von einer Person durch Sicht oder dergleichen, geprüft und akzeptiert wird. Beispielsweise kann am Anfang eines Herstellvorgangs oder einer Serie von Herstellvorgängen eine Klinge angeregt und das Ergebnis einer Klanganalyse als Referenzgröße abgespeichert werden, wenn eine Person während des Aufbringens von Material oder nach Herstellung der Schicht diesen Zyklus, beispielsweise durch Eingabe eines Signals in die Vorrichtung, akzeptiert.

Vorzugsweise wird die physikalische Größe in mehreren Zyklen, insbesondere in vorgegebenen Abständen und vorzugsweise periodisch, erfasst und eine Veränderung der physikalischen Größe dokumentiert, insbesondere gespeichert, und/oder analysiert. Auf diese Weise kann einerseits ein Herstellungsvorgang überwacht und das hergestellte Bauteil bewertet werden. Auf der anderen Seite können auch Veränderungen der Vorrichtung, beispielsweise eine Veränderung der Klingenbefestigung, erfasst werden.

Ein Verfestigungsmittel zum lokalen Verfestigen von verfestigbarem Material kann insbesondere eine Lichtquelle, vorzugsweise einen Laser, eine Wärmequelle und/oder eine Flüssigkeitsquelle, insbesondere eine oder mehrere Düsen zum, insbesondere tropfenartigen, Aufbringen von Chemikalien, und/oder eine oder mehrere, vorzugsweise veränderliche, Masken zum Maskieren von nicht zu verfestigenden Bereichen, aufweisen.

Ein Erfassungsmittel zum Erfassen einer physikalischen Größe der Vorrichtung und/oder des entstehenden Bauteils ist einen Lautsprecher zur Anregung und/oder ein Mikrophon zur Erfassung von Schallwellen auf.

Eine erfindungsgemäße Vorrichtung ist zur Durchführung eines erfindungsgemäßen Verfahrens eingerichtet. Insbesondere ist sie ein Verarbeitungsmittel zum wenigstens teilweise automatisierten Erfassen der physikalischen Größe, zum Vergleichen mit der Referenzgröße, zum Dokumentieren, Analysieren und/oder zum Auslösen einer Reaktion, und/oder zur Anregung von Vorrichtung und/oder Bauteil aufweisen. Das Verarbeitungsmittel kann in eine Steuerung zum Steuern der Vorrichtung, insbesondere ihrer Bewegung, dem Aufbringen und/oder lokalen Verfestigen, integriert sein. Gleichermaßen kann sie separat ausgebildet sein und ist dann vorzugsweise mit der Steuerung gekoppelt. Die erfindungsgemäß eingerichtete Vorrichtung kann insbesondere ein Programm zur Ausführung eines erfindungsgemäßen Verfahrens aufweisen.

Weitere Vorteile und Merkmale ergeben sich aus den Unteransprüchen und dem Ausführungsbeispiel. Hierzu zeigen, teilweise schematisiert,:

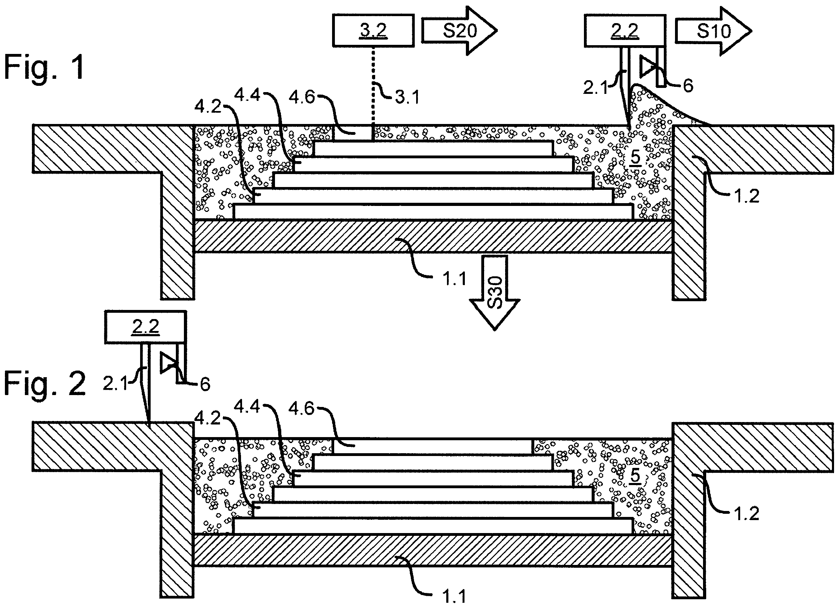

- Fig. 1, 2:: eine Vorrichtung bei der Durchführung eines Verfahrens nach einer Ausführung der vorliegenden Erfindung.

Fig. 1 zeigt eine Vorrichtung nach einer Ausführung der vorliegenden Erfindung bei der Durchführung eines Zyklus eines Verfahrens nach einer Ausführung der vorliegenden Erfindung in einem Querschnitt, Fig. 2 die Vorrichtung der Fig. 1 bei einem Zwischenschritt zwischen zwei Zyklen.

Die Vorrichtung umfasst einen Träger 1.1 zur Positionierung eines entstehenden Bauteils 4 sowie einen Hohlraum 1.2. Träger 1.1 und Hohlraum 1.2 sind relativ zueinander in vertikaler Richtung verschiebbar, wie in Fig. 1 durch Schritt S30 angedeutet.

Ein Aufbringmittel zum Zuführen, Verteilen und/oder Entfernen von verfestigbarem Material 5 umfasst eine Klinge 2.1 und ihre Befestigung 2.2, die, wie in Fig. 1 durch Schritt S10 angedeutet, quer zu der Bewegungsrichtung zwischen Träger und Hohlraum verfahrbar ist.

Ein Verfestigungsmittel zum lokalen Verfestigen von verfestigbarem Material umfasst einen Laser 3.2, der ebenfalls quer zu der Bewegungsrichtung zwischen Träger 1.1 und Hohlraum 1.2 verfahrbar ist, wie in Fig. 1 durch Schritt S20 angedeutet, und der mit einem Laserstrahl 3.1, der durch eine Optik abgelenkt und fokussiert werden kann (nicht dargestellt), lokal das Material 5 belichtet und dadurch verfestigt.

Ein Erfassungsmittel zum Erfassen einer physikalischen Größe der Vorrichtung umfasst eine Lautsprecher-Mikrophon-Anordnung 6, die an der Befestigung 2.2 angeordnet, auf die Klinge 2.1 gerichtet und mit einem Verarbeitungsmittel, das in die Steuerung der Vorrichtung integriert ist, verbunden ist (nicht dargestellt).

Am Anfang eines Herstellvorgangs wird zunächst der Träger 1.1 eine Schicht-Wandstärke des schichtweise herzustellenden Bauteils unterhalb der Oberkante des Hohlraums 1.2 positioniert und der durch den Träger 1.1 und den Rand des Hohlraums 1.2 definierte Raum mit pulverförmigem, verfestigbaren Material 5, beispielsweise Kunststoffpulver wie Polyamid, Polystyrol, PEEK, Metallpulver wie Edelstahl- oder Titanpulver, Keramikpulver oder dergleichen gefüllt. Überschüssiges, d.h. über die Oberkante des Hohlraums 1.2 bzw. die gewünschte Schichtdicke überstehendes Material wird entfernt. Beides kann gemeinsam durch die Klinge 2.1 erfolgen, die hierzu einen Überschuss an Material 5 vor sich herschiebend den Träger überfährt und dabei das Material zuführt, verteilt und überschüssiges Material mitnimmt und so entfernt. Gleichermaßen kann das Material getrennt zunächst zugeführt werden (nicht dargestellt), und durch die Klinge 2.1 anschließend verteilt und überschüssiges Material entfernt werden. Im Sinne der vorliegenden Erfindung wird das Zuführen, Verteilen und Entfernen gleichermaßen als Aufbringen bezeichnet, so dass insbesondere auch eine Klinge, die nur Material verteilt oder entfernt, eine Schicht mit verfestigbarem Material aufbringt, indem sie die gewünschte Schichtdicke herstellt.

Während des Überfahrens des Trägers (Fig. 1: S10) wird die Klinge kontinuierlich oder intermittierend durch die Lautsprecher-Mikrophon-Anordnung 6 akustisch zu Schwingungen angeregt. In einer nicht dargestellten Abwandlung kann die Klinge 2.1 auch mechanisch, beispielsweise durch einen Piezokristall oder ein Vibrieren der Befestigung 2.2, angeregt werden. Vorteilhaft vergleichmäßigt und verdichtet dies das aufgebrachte verfestigbare Material 5.

Aufgrund ihrer mechanischen Schwingungen strahlt die Klinge 2.1 Schall ab. Dieser wird von der Lautsprecher-Mikrophon-Anordnung 6 erfasst. Diese oder das Verarbeitungsmittel führen eine Klanganalyse durch, insbesondere können sie ein Frequenzspektrum des von der angeregten Klinge abgestrahlten Schalls ermitteln.

Der Klinge 2.1 folgt, entweder noch während ihres Überfahrens des Trägers, wie in Fig. 1 dargestellt, oder zeitlich sequentiell danach, der Laser 3.2 (Fig. 1: S20), dessen Strahl 3.1 durch die Optik so abgelenkt wird, dass er nur die Bereiche in dem Material 5 belichtet, die dem Querschnitt des herzustellenden Bauteils entsprechen.

Dieser Zyklus wird durch eine Person durch Sicht überwacht (nicht dargestellt). Beispielsweise kann die Person während des Aufbringens oder nach dem Aufbringen die aufgebrachte Schicht aus verfestigbarem Material 5 betrachten und auf Gleichmäßigkeit bewerten. Gleichermaßen kann die Person die hergestellte Bauteilschicht auf Sicht prüfen.

Akzeptiert die Person diesen Zyklus, wird das Ergebnis der Klanganalyse als Referenzgröße abgespeichert. Die Kontrolle des Zyklus kann auch automatisiert erfolgen (nicht dargestellt).

Nun wird der Träger um eine Schichtdicke nach unten gefahren (Fig. 1: S30), so dass sich ein Zustand einstellt, wie er in Fig. 2 gezeigt ist. Dann wird in gleicher Weise eine neue Schicht verfestigbaren Materials 5 durch die Klinge 2.1 aufgebracht, die dabei zu Schwingungen angeregt wird und infolgedessen Schall abstrahlt, der von der Lautsprecher-Mikrophon-Anordnung 6 erfasst wird. Wiederum wird eine Klanganalyse durchgeführt, deren Ergebnis mit der gespeicherten Referenzgröße verglichen wird.

Stimmen diese innerhalb einer vorgegebenen Toleranz überein, wird der Aufbring-Schritt akzeptiert und der Laser 3.2 verfestigt lokal diese Bauteilschicht.

Hat beispielsweise, wie in Fig. 2 dargestellt, die Klinge 2.1 zuwenig Material 5 aufgebracht, da zum Beispiel der Vorrat erschöpft ist, ändert sich die Klangantwort der Klinge 2.1, die nun frei(er) schwingen kann und auf die Anregung mit einem anderen Klang reagiert. Dieser fehlerhafte Aufbring-Schritt wird vom Verarbeitungsmittel aufgrund der unzulässig großen Abweichung der erfassten physikalischen Größe in Form des Frequenzspektrums und der Referenzgröße erkannt, das daraufhin eine Warnung ausgibt und den Verfestigungsschritt S20 aufhält oder wiederholt. Sodann wird der Aufbring-Schritt S10 wiederholt und, sofern er nun akzeptiert wird, der Verfestigungsschritt S20 durchgeführt.

Auch wenn beispielsweise die Einspannung in der Befestigung 2.2 nachlässt, ändert sich das Ergebnis der Klanganalyse. Auch dies kann vom Verarbeitungsmittel erkannt werden, das daraufhin eine entsprechende Warnung ausgibt und den weiteren Herstellvorgang unterbricht, bis die Einspannung nachgezogen worden ist.

Auf diese Weise wird das Bauteil in Schichten 4.2, 4.4, 4.6 aufgebaut, indem die oben beschriebenen Schritte zyklisch wiederholt werden.

Wird irrtümlich eine falsche Klinge statt der Klinge 2.1 montiert, kann auch dies durch die Klanganalyse erkannt werden. Hierzu kann beispielsweise als weitere Referenzgröße das Ergebnis einer Klanganalyse mit der richtigen Klinge vorgegeben sein, wobei das Verarbeitungsmittel anhand der gewünschten Herstellungsart die richtige Klinge und dementsprechend die hierzu abgespeicherte Referenzgröße vorgibt. Hierzu kann die Klanganalyse auch vor dem Aufbringen des Materials 5 erfolgen.

### Bezugszeichenliste

- 1.1: Träger (Vorrichtung)
- 1.2: Hohlraum (übrige Vorrichtung)
- 2.1: Klinge (Aufbringmittel)
- 2.2: Befestigung
- 3.1: Laserstrahl
- 3.2: Laser (Verfestigungsmittel)
- 4(.2, .4, .6): Bauteil(schicht)
- 5: verfestigbares Material
- 6: Lautsprecher-Mikrophon-Anordnung (Erfassungsmittel)

## Patentansprüche

1. Verfahren zur Erkennung von Fehlern während der generativen Herstellung eines Bauteils (4) umfassend einen sich mehrfach wiederholenden Zyklus mit den Schritten:
- Aufbringen (S10) einer Schicht mit verfestigbarem Material (5) mit einem Aufbringmittel; und
- lokales Verfestigen (S20) von Material in dieser Schicht,
wobei
- das Aufbringmittel eine Klinge (2.1) und deren Befestigung (2.2) umfasst und wobei
- in wenigstens einem Zyklus wenigstens teilweise automatisiert eine physikalische Größe der Vorrichtung und/oder des entstehenden Bauteils erfasst und mit einer - zuvor in einem kontrollierten, geprüften und akzeptierten Zyklus erfassten - vorgegebenen Referenzgröße verglichen wird, und wobei
- das Erfassungsmittel zum Erfassen der physikalischen Größe eine Lautsprecher-Mikrophon-Anordnung (6) umfasst, die an der Befestigung (2.2) angeordnet ist und die auf die Klinge (2.1.) gerichtet ist und mit einem Verarbeitungsmittel, welches in die Steuerung der Vorrichtung integriert ist, verbunden ist und wobei - die Erfassung der Physikalischen Größe eine Klanganalyse durch Vermessen von Schallwellen in Frequenz, Amplitude und zeitlicher Klangentwicklung umfasst.

2. Verfahren nach Anspruch 1, **dadurch gekennzeichnet, dass** die Vorrichtung (2.1) bzw. das entstehende Bauteil akustisch und/oder mechanisch angeregt wird, um die physikalische Größe zu erfassen.

3. Verfahren nach einem der vorhergehenden Anspruch, **dadurch gekennzeichnet, dass** die physikalische Größe in mehreren Zyklen erfasst und eine Veränderung der physikalischen Größe dokumentiert, gespeichert und/oder analysiert wird.

4. Verfahren nach einem der vorhergehenden Ansprüche, **dadurch gekennzeichnet, dass** zwischen zwei Zyklen das entstehende Bauteil (4) relativ zu der Vorrichtung bewegt wird (S30).

5. Vorrichtung zur Erkennung von Fehlern während des Verfahrens zur generativen Herstellung eines Bauteils (4), mindestens umfassend
- einen Träger (1.1) zur Positionierung des entstehenden Bauteils (4);
- ein Aufbringmittel (2.1) zum Zuführen, Verteilen und/oder Entfernen von verfestigbarem Material (5), wobei das Aufbringmittel eine Klinge (2.1) und deren Befestigung (2.2) umfasst;
- ein Verfestigungsmittel (3.2) zum lokalen Verfestigen von verfestigbarem Material (5); und
- ein Erfassungsmittel (6) zum Erfassen einer physikalischen Größe der Vorrichtung (2.1) und/oder des entstehenden Bauteils, wobei das Erfassungsmittel eine Lautsprecher-Mikrophon-Anordnung (6) umfasst, die an der Befestigung (2.2) angeordnet ist und die auf die Klinge (2.1.) gerichtet ist und mit einem Verarbeitungsmittel, welches in die Steuerung der Vorrichtung integriert ist, verbunden ist.

6. Vorrichtung gemäß Anspruch 5 zur Verwendung in einem Verfahren gemäß einem der Ansprüche 1 bis 4.

## Claims

1. Method for detecting errors during generative production of a component (4), comprising a cycle that repeats multiple times having the following steps:
- applying (S10) compactable material (5) to a layer using an application means, and
- locally compacting (S20) material in this layer,
wherein
- the application means comprises a blade (2.1) and the attachment means (2.2) thereof, and wherein
- in at least one cycle, at least in part automatically, a physical variable of the apparatus and/or of the component being produced is recorded and compared with a predetermined reference variable that has been previously recorded in a controlled, checked and accepted cycle,
and wherein
- the recording means for recording the physical variable comprises a speaker/microphone arrangement (6) which is arranged on the attachment means (2.2), is directed towards the blade (2.1) and is connected to a processing means which is integrated in the controller of the apparatus,
and wherein
- recording the physical variable comprises analysis of sound by measuring the frequency and amplitude of sound waves, and the development of sound over time.

2. Method according to claim 1, **characterized in that** the apparatus (2.1) and/or the component being produced is/are acoustically and/or mechanically stimulated in order to record the physical variable.

3. Method according to either of the preceding claims, **characterized in that** the physical variable is recorded in multiple cycles and any change in the physical variable is documented, stored and/or analyzed.

4. Method according to any of the preceding claims, **characterized in that**, between two cycles, the component (4) being produced is moved (S30) in relation to the apparatus.

5. Apparatus for detecting errors during the method for generatively producing a component (4), comprising at least
- a support (1.1) for positioning the component (4) being produced;
- an application means (2.1) for feeding, distributing and/or removing compactable material (5), wherein the application means comprises a blade (2.1) and the attachment means (2.2) thereof;
- a compacting means (3.2) for locally compacting compactable material (5); and
- a recording means (6) for recording a physical variable of the apparatus (2.1) and/or the component being produced, wherein the recording means comprises a speaker/microphone arrangement (6) which is arranged on the attachment means (2.2), is directed towards the blade (2.1) and is connected to a processing means which is integrated in the controller of the apparatus.

6. Apparatus according to claim 5 for use in a method according to any of claims 1 to 4.

## Revendications

1. Procédé de détection d'erreurs pendant la fabrication générative d'un composant (4), le procédé comprenant un cycle qui se répète plusieurs fois et qui comporte les étapes :
- d'application (S10) d'une couche de matière durcissable (5) à l'aide d'un moyen d'application ; et
- de durcissement local (S20) de la matière de cette couche,
- le moyen d'application comportant une lame (2.1) et la fixation (2.2) de celle-ci et,
- dans au moins un cycle, une grandeur physique du dispositif et/ou du composant produit étant détectée de manière au moins partiellement automatisée et comparée à une grandeur de référence prescrite qui a été préalablement détectée dans un cycle contrôlé, vérifié et accepté et
- le moyen de détection destiné à détecter la grandeur physique comportant un ensemble microphone/haut-parleur (6) qui est disposé au niveau de la fixation (2.2) et qui est dirigé vers la lame (2.1) et relié à un moyen de traitement intégré dans la commande du dispositif et la détection de la grandeur physique comportant une analyse du son par mesure des ondes sonores en termes de fréquence, d'amplitude et d'évolution du son dans le temps.

2. Procédé selon la revendication 1, **caractérisé en ce que** le dispositif (2.1) ou le composant produit est excité acoustiquement et/ou mécaniquement pour détecter la grandeur physique.

3. Procédé selon l'une des revendications précédentes, **caractérisé en ce que** la grandeur physique est détectée dans plusieurs cycles et une variation de la grandeur physique est établie, mémorisée et/ou analysée.

4. Procédé selon l'une des revendications précédentes, **caractérisé en ce que**, entre deux cycles, le composant produit (4) est déplacé (S30) par rapport au dispositif.

5. Dispositif de détection d'erreurs pendant le procédé de fabrication générative d'un composant (4), le dispositif comprenant au moins
- un support (1.1) destiné à positionner le composant produit (4) ;
- un moyen d'application (2.1) destiné à amener, répartir et/ou enlever la matière durcissable (5), le moyen d'application comportant une lame (2.1) et la fixation (2.2) de celle-ci ;
- un moyen de durcissement (3.2) destiné à durcir localement la matière durcissable (5) ; et
- un moyen de détection (6) destiné à détecter une grandeur physique du dispositif (2.1) et/ou du composant produit, le moyen de détection comportant un ensemble microphone/haut-parleur (6) qui est disposé au niveau de la fixation (2.2) et qui est dirigé vers la lame (2.1) et relié à un moyen de traitement intégré dans la commande du dispositif.

6. Dispositif selon la revendication 5, destiné à être utilisé dans un procédé selon l'une des revendications 1 à 4.
